# EUROPÄISCHE PATENTSCHRIFT

(11) **EP 0 981 461 B1**
(45) Veröffentlichungstag und Bekanntmachung des Hinweises auf die Patenterteilung: **12.09.2001**
(21) Anmeldenummer: 98933545.0
(22) Anmeldetag: 12.05.1998
(51) Int. Cl.: B60N 2/22, B60N 2/44

(54) **BEIDSEITIG WIRKENDER ANTRIEB**
BILATERALLY EFFECTIVE DRIVE MECHANISM
ENTRAINEMENT A EFFET BILATERAL

(30) Priorität: 13.05.1997 DE 19720860
(43) Veröffentlichungstag der Anmeldung: 01.03.2000
(73) Patentinhaber: Brose Fahrzeugteile GmbH & Co. KG Coburg, 96450 Coburg (DE)
(72) Erfinder: SCHUMANN, Peter, D-96253 Untersiemau (DE)
(74) Vertreter: Müller, Wolfram Hubertus, Dipl.-Phys.
(86) Internationale Anmeldenummer: DE9801357
(87) Internationale Veröffentlichungsnummer: WO9851529

(56) Entgegenhaltungen:
- DE-A- 3 608 858
- DE-A- 4 120 617
- DE-A- 4 309 334
- DE-A- 19 527 912
- US-A- 4 614 257

## Beschreibung

Die Erfindung betrifft einen beidseitig wirkenden Antrieb nach dem Oberbegriff des Anspruchs 1. Ein derartiger Antrieb eignet sich insbesondere für die Verwendung in einer manuellen Höhen- oder Neigungsverstellungseinrichtung eines Fahrzeugsitzes.

Aus der DE 43 09 334 A1 ist ein gattungsgemäßer beidseitig wirkender Antrieb bekannt, bei dem eine Kraftübertragung von einem Antriebshebel auf eine anzutreibende Welle über Kraftschlußelemente erfolgt, die auf der Welle angeordnet sind. Die Kraftschlußelemente weisen bei Eintritt in die Antriebsphase mit der Oberfläche der anzutreibenden Welle eine reibungsbedingte Selbsthemmung auf. Dadurch wird gewährleistet, daß sich das Reibmoment in Abhängigkeit zum Antriebsmoment selbst verstärkt, wodurch auch große Kräfte übertragbar sind. Bei der Reversierbewegung des Antriebshebels in Richtung seiner Nullpunktlage ist die Selbsthemmung jedoch aufgehoben und das Reibmoment möglichst klein gehalten.

Die Steuerung der Bedingungen der Selbsthemmung wird von einem elastischen Schaltelement übernommen. Eine Schwenkbewegung des Antriebshebels über seine Nullpunktlage hinaus führt zur Spreizung des insbesondere als Drahtformfeder ausgeführten elastischen Schaltelements. Die dadurch hervorgerufene tangential wirkende Kraft verursacht im Rahmen des vorgesehenen Spiels der Antriebsvorrichtung Kipp- und Verspannvorgänge, so daß die Selbsthemmung wirksam und verstärkt werden kann.

Bei einer Rückkehr des Antriebshebels in die Nullpunktlage übt das eine Federende des elastischen Schaltelements über einen Bolzen auf die Kraftschlußelemente eine tangentiale Kraft aus, die in Schwenkrichtung des Antriebshebels wirkt und die Selbsthemmungseigenschaften aufhebt, so daß ein Verklemmen bzw. Zurückdrehen der Welle verhindert wird.

Beidseitig wirkende Antriebe der in der DE 43 09 334 A1 beschriebenen Art weisen üblicherweise zusätzlich zu den dort beschriebenen Elementen eine Rückholfeder zum Rückholen des Antriebshebels in seine Nullpunktlage auf. Die Rückholfeder stützt sich dabei zum einen an einem gehäusefesten Gehäuseanschlag ab und ist zum anderen mit einem Rückholanschlag gekoppelt, der unmittelbar am Antriebshebel befestigt ist. Eine derartige Rückholfeder ist beispielsweise in der DE 195 27 912 A1 beschrieben.

Bekannte beidseitig wirkende Antriebe der eingangs genannten Art weisen somit zwei Federelemente auf, ein Federelement zum Rückholen des Antriebshebels in seine Nullpunkt-lage und ein Federelement (elastisches Schaltelement) für ein Verklemmen der Kraftschlußelemente mit der Welle.

Ausgehend von diesem Stand der Technik liegt der Erfindung die Aufgabe zugrunde, einen beidseitig wirkenden Antrieb zur Erzeugung einer Drehbewegung zur Verfügung zu stellen, der flach und kompakt ausgebildet ist und sich durch wenige Teile auszeichnet.

Diese Aufgabe wird erfindungsgemäß durch einen beidseitig wirkenden Antrieb mit den Merkmalen des Anspruchs 1 gelöst. Bevorzugte und vorteilhafte Ausgestaltungen der Erfindung sind in den Unteransprüchen angegeben.

Die erfindungsgemäße Lösung sieht vor, daß der mit der Rückholfeder gekoppelte Rückholanschlag an einem der Kraftschlußelemente befestigt ist. Dabei dient die Rückholfeder als elastisches Schaltelement, das heißt die Rückholfeder bewirkt bei einer von der Nullpunktlage weggerichteten Bewegung des Antriebshebels ein Verklemmen der Kraftschlußelemente mit der Welle. Gleichzeitig dient die Rückholfeder zum Rückholen des Antriebshebels in seine Nullpunktlage, wobei das mit dem Rückholanschlag verbundene Kraftschlußelement seinerseits kraftschlüssig und/oder formschlüssig mit dem Antriebshebel in Verbindung steht, so daß eine Rückstellkraft über das Kraftschlußelement auf den Antriebshebel übertragen wird.

Durch das erfindungsgemäße Befestigen des Rückholanschlags an einem der Kraftschlußelemente erfüllt die Rückholfeder somit eine doppelte Funktion. Neben der Rückstellfunktion erfüllt sie auch die Funktion des im Stand der Technik bisher gesondert vorgesehenen elastischen Schaltelementes und bewirkt eine Selbsthemmung der Kraftschlußelemente mit der Oberfläche der anzutreibenden Welle bei einer von der Nullpunktlage weggerichteten Bewegung des Antriebshebels. Für ein gesondertes elastisches Schaltelement, das die letztgenannte Funktion erfüllt, ist damit kein Bedarf mehr.

Durch Einsparung eines gesonderten elastischen Schaltelementes kann der Antrieb insgesamt flacher und kompakter ausgebildet werden. Der Platzbedarf ist verringert. Durch die Verminderung der Teile wird auch die Toleranzkette, das heißt die Summe der maximalen Toleranzen zwischen den einzelnen Teilen verringert, so daß das Spiel des Antriebshebel verringert wird.

Es wird darauf hingewiesen, daß das aus der DE 43 09 334 A1 bekannte Klemmprinzip bei der vorliegenden Erfindung unverändert eingesetzt wird. Was die entsprechende Ausgestaltung der einzelnen Kraftschlußelemente und deren gelenkige Verbindung angeht, wird insofern auf diese Druckschrift Bezug genommen.

In einer bevorzugten Ausgestaltung der Erfindung lagert die Rückholfeder abtriebsseitig an einem Bremsgehäuse. Das Bremsgehäuse enthält eine Bremsvorrichtung, die mit der Welle derart in Verbindung steht, daß eine abtriebsseitige Drehmomentübertragung gesperrt ist, jedoch eine antriebsseitige Drehmomentübertragung die Sperrwirkung aufhebt. Eine derartige Sperrvorrichtung ist an sich beispielsweise aus der DE 41 20 617 A1 bekannt.

Bevorzugt ist zwischen den auf der Wellenachse angeordneten Kraftschlußelementen und dem Bremsgehäuse ein Befestigungsträger angeordnet, über den der beidseitig wirkende Antrieb an einem tragenden Element, etwa einem Fahrzeugsitz befestigbar ist. Der mit der Rückholfeder verbundene gehäusefeste Gehäuseanschlag ist dabei bevorzugt am Bremsgehäuse oder am Befestigungsträger befestigt bzw. ausgebildet. Der Gehäuseanschlag bildet dabei ein Festlager, an dem sich die Feder abstützt.

Als Rückholfeder wird bevorzugt eine schraubenförmige Drehfeder oder Draht formfeder mit zwei freien Enden verwendet, die mit dem Gehäuseanschlag bzw. dem Rückholanschlag in Verbindung stehen. Derartige Federn ermöglichen in einfacher Weise die Erzeugung einer tangential wirkenden Kraft. Auch handelt es sich um relativ einfach herstellbare und kostengünstige Bauteile.

Der Rückholanschlag ist mit Vorteil als Lasche ausgebildet, die an dem entsprechenden Kraftschlußelement ausgebildet ist, sich von diesem bis zur Rückstellfeder erstreckt und mit dem einen freien Ende der Rückstellfeder in Verbindung steht. Das mit dem Rückholanschlag versehene Kraftschlußelement ist dabei bevorzugt als Stanz-Biege-Teil ausgebildet. Dies ermöglicht eine kostengünstige Herstellung des Kraftschlußelements, wobei der Rückholanschlag in einfacher Weise durch Stanzen und Biegen hergestellt wird.

In einer bevorzugten Ausgestaltung der Erfindung sind insgesamt drei Kraftschlußelemente vorgesehen, die auf der Wellenachse angeordnet und für ein Verklemmen mit der Welle untereinander gelenkig verbunden sind, wie beispielsweise in der DE 43 09 334 A1 beschrieben.

In einer bevorzugten Ausgestaltung dieser Erfindungsvariante ist das mittlere Kraftschlußelement als Sinterteil und sind die beiden daran anliegenden seitlichen Kraftschlußelemente als Blechteile ausgebildet. Das Sinterteil ist dabei mit Bolzen versehen, die in korrespondierende Löcher der beiden anliegenden seitlichen Kraftschlußelemente eingreifen und eine gelenkige Verbindung des mittleren Kraftschlußelements mit dem jeweils anliegenden seitlichen Kraftschlußelement herstellen. Bei einer Betätigung des Antriebshebels aus seiner Nullpunktlage heraus verkippen die seitlichen Kraftschlußelemente gegenüber dem mittleren Kraftschlußelement, wodurch sie die anzutreibende Welle einklemmen.

Die jeweiligen Kraftschlußelemente sind bevorzugt ringförmig ausgebildet und weisen innere Kraftangriffsbereiche auf, die mit der zylindrischen Kontur der Welle in Eingriff bringbar sind. Es wird insofern ebenfalls auf die DE 43 09 334 A1 Bezug genommen.

Bei einer Fertigung der Kraftschlußelemente aus Blech sind die einzelnen Kraftschlußelemente zur gelenkigen Verbindung untereinander bevorzugt mit Durchstellungen, Laschen und/ oder Prägungen versehen. Derartige Kraftschlußelemente sind einfach und kostengünstig herstellbar und ermöglichen in einfacher Weise die Ausbildung einer gelenkigen Verbindung zwischen den einzelnen Kraftschlußelementen.

Die Erfindung wird nachfolgend unter Bezugnahme auf die Figuren der Zeichnung an mehreren Ausführungsbeispielen im einzelnen erläutert. Es zeigen:
- Figur 1 -: schematisch eine Explosionsdarstellung eines erfindungsgemäßen, beidseitig wirkenden Antriebs mit drei Kraftschlußelementen,
- Figur 2 -: eine perspektivische Ansicht des Antriebs der Figur 1,
- Figur 3 -: eine weitere perspektivische Ansicht des Antriebs der Figur 1, wobei auf dem Befestigungsblech ein Abdeckblech zum Halten des Antriebshebels befestigt ist,
- Figur 4 -: eine Schnittansicht eines erfindungsgemäßen Antriebs und
- Figur 5 -: eine Explosionsdarstellung eines erfindungsgemäßen, beidseitig wirkenden Antriebs mit zwei Kraftschlußelementen.

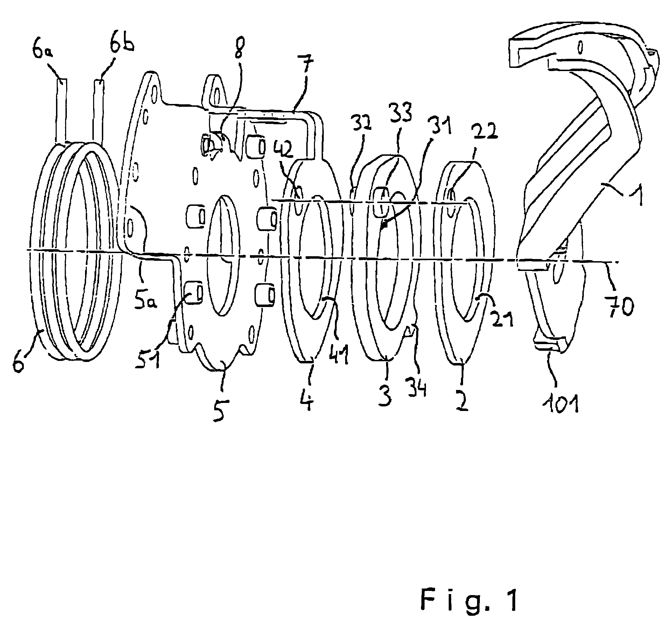

Der in den Figuren 1 bis 3 dargestellte, beidseitig wirkende Antrieb weist einen Antriebshebel 1, drei ringförmige Kraftschlußelemente 2, 3, 4, einen Befestigungsträger 5 und eine Rückholfeder 6 mit zwei freien Enden 6a, 6b auf. Sämtliche genannten Elemente sind auf einer gemeinsamen Achse 70 angeordnet, auf der die nicht dargestellte anzutreibende Welle verläuft.

Die Kraftschlußelemente 2, 3, 4 weisen jeweils Kraftangriffsflächen 21, 31, 41 auf, die mit der zylindrischen Kontur der nicht dargestellten Welle in Eingriff bringbar sind. Die Kraftangriffsflächen 21, 41 der Kraftschlußelemente 2, 4 sind diametral zur Kraftangriffsfläche 31 des Kraftschlußelementes 3 angeordnet. Das Kraftschlußelement 3 ist als Sinterteil ausgebildet und weist zwei Bolzen 32, 33 auf, die in entsprechende Löcher 42, 22 der Kraftschlußelemente 4, 2 eingreifen. Hierdurch wird eine gelenkige Verbindung der Kraftschlußelemente 2, 3, 4 hergestellt. Die Kraftschlußelemente 2, 4 sind bevorzugt aus Blech gestanzt.

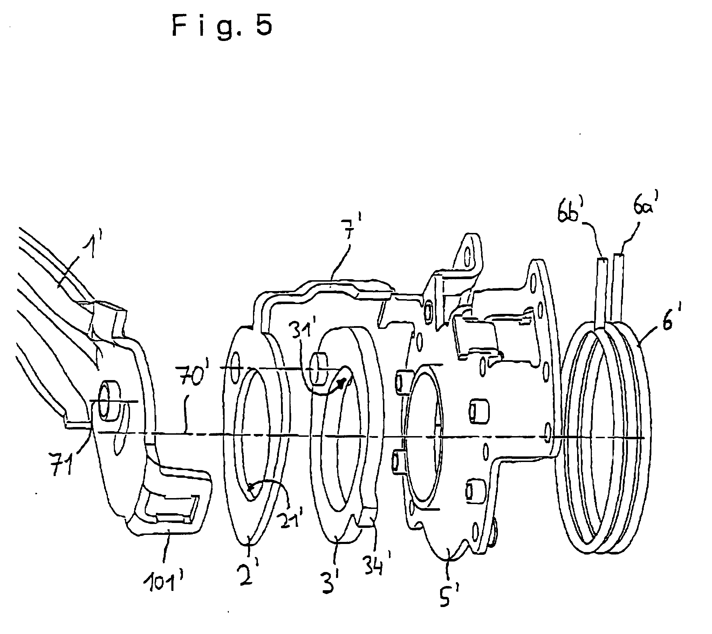

Der Antriebshebel 1 ist formschlüssig mit dem mittleren Kraftschlußelement 3 verbunden. Hierzu ist am Antriebshebel 1 eine Befestigungslasche 101 ausgebildet, die sich in Richtung des mittleren Kraftschlußelementes 3 erstreckt und dort in eine Nase 34 eingreift. Eine derartige Ausbildung ist besonders gut im Ausführungsbeispiel der Figur 5 zu erkennen, auf die insofern Bezug genommen wird.

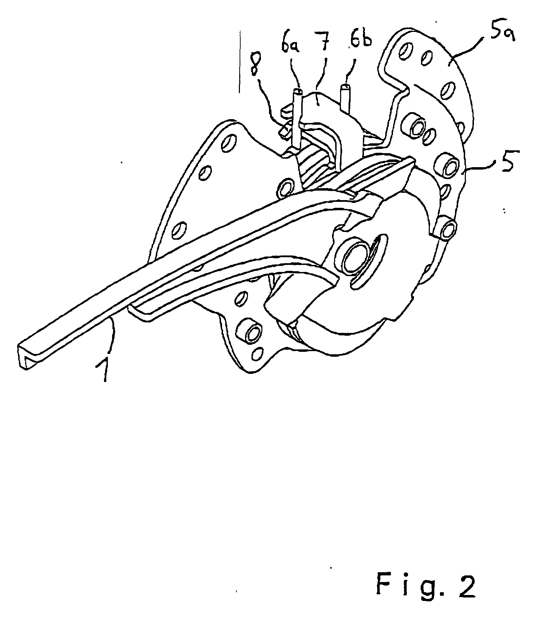

Das dem Befestigungsträger 5 nächstliegende Kraftschlußelement 4 bildet einen Rückholanschlag oder Rückhollasche 7 (auch als Verspannbolzen oder Verspannanschlag bezeichenbar) aus. Die Rückhollasche 7 erstreckt sich über den Befestigungsträger 5 hinaus bis zu dem einen Schenkel 6a der Rückstellfeder 6 und liegt innenseitig an diesem an. Am Befestigungsträger 5 ist eine weitere Lasche, eine Gehäuselasche 8, vorgesehen, die mit dem anderen freien Ende 6b der Rückstellfeder 6 in Eingriff steht. Wie in Figur 2 dargestellt, sind die beiden Laschen 7, 8 zwischen den beiden freien Enden 6a, 6b der Rückstellfeder 6 eingeklemmt.

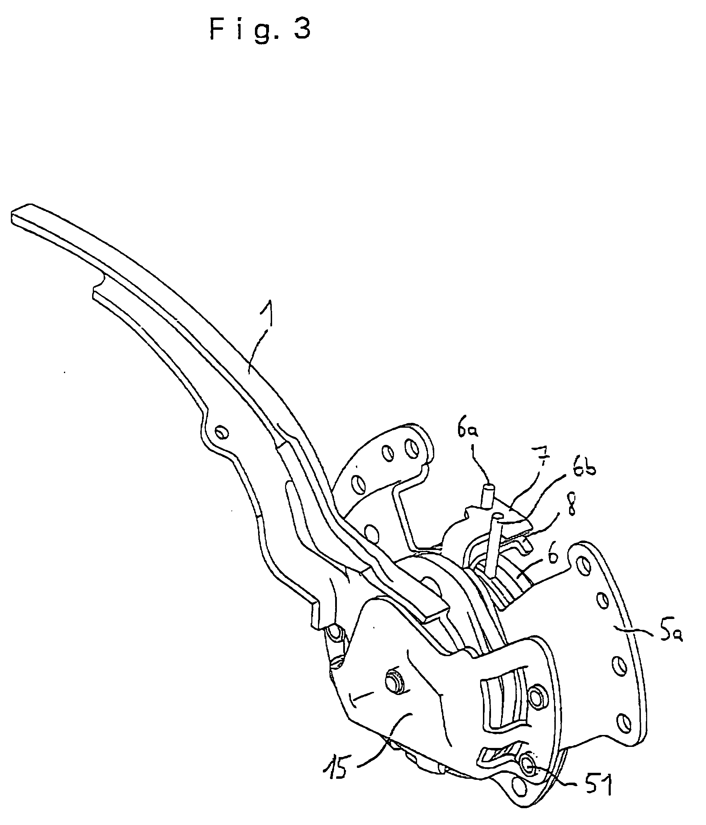

Der Befestigungsträger 5 ist über Befestigungsflächen 5a mit einem trägerfesten Element, beispielsweise dem Seitenteil eines Kraftfahrzeugsitzes, befestigt. Des weiteren sind am Befestigungsträger 5 Hülsen 51 zur Befestigung eines in Figur 3 dargestellten Abdeckblechs 15 vorgesehen.

Das Abdeckblech 15 deckt dabei den um die anzutreibende Welle angeordneten Bereich des Antriebshebels 1 sowie die Kraftschlußelemente 2, 3, 4 ab.

Die Darstellung der Figur 1 zeigt lediglich die für die vorliegende Erfindung bedeutsamen Elemente des beidseitig wirkenden Verstellantriebs. Gegebenenfalls sind weitere Elemente, wie.Distanzhülsen oder Abstandscheiben vorhanden. Insbesondere ist ein in Figur 1 nicht dargestelltes und in den Figuren 2 und 3 nicht erkennbares Bremsgehäuse vorgesehen, in dem eine Bremsvorrichtung angeordnet ist. Die Bremsvorrichtung steht derart mit der Welle in Verbindung, daß eine abtriebsseitige Drehmomentübertragung gesperrt, bei einer antriebsseitigen Drehmomentübertragung die Sperrwirkung dagegen aufgehoben ist. Die Bremsvorrichtung verhindert somit, daß bei Auftreten äußerer Kräfte eine Verstellung des Antriebes erfolgt. Insbesondere stellt sie sicher, daß im Falle des Auftretens von Crashkräften eine Drehbewegung der Welle verhindert wird. Bevorzugt lagert auf dem äußeren Umfang des nicht dargestellten Bremsgehäuses die Rückstellfeder 6.

Bei Ausführen einer Schwenkbewegung des Antriebshebels 1 aus der Nullpunktlage heraus wird über die Verbindung 101 des Antriebshebels 1 mit der Nase 34 des Kraftschlußelements 3 dieses ebenfalls verschwenkt. Über die gelenkige Verbindung 32, 42 wird die Drehung des Kraftschlußelements 3 auf das Kraftschlußelement 4 übertragen. Mittels der Rückhollasche 7 des Kraftschlußelements 4 wird die Drehbewegung weiter auf die Rückstellfeder 6 übertragen, und zwar auf das mit der Rückhollasche 7 in Verbindung stehende freie Ende 6a. Das freie Ende 6b stützt sich an der Gehäuselasche 8 ab.

Mit Auslenken des freien Endes 6a wird die Rückstellfeder 6 gespannt. Damit wirkt auf die Rückhollasche 7 eine tangentiale Kraft, die eine Kippbewegung des Kraftschlußelements 4 gegenüber dem Kraftschlußelement 3 bewirkt. Entsprechend wird auch das Kraftschlußelement 2 gegenüber dem mittleren Kraftschlußelement 3 verkippt. Damit kommen die jeweiligen Kraftangriffsbereiche 41, 31, 21 der Kraftschlußelemente 4, 3, 2 mit der Oberfläche der Welle in Eingriff, wodurch die Welle durch die Kraftschlußelemente 2, 3, 4 bzw. deren Kraftangriffsbereiche 21, 31, 41 eingeklemmt wird und eine reibungsbedingte Selbsthemmung auftritt. Auf diese Weise wird das Drehmoment des Antriebshebels 1 auf die Welle übertragen.

Bei einem Loslassen des Antriebshebels 1 wird dieser über die Rückholfeder 6 automatisch in die Nullpunktlage zurückgeführt. Die Rückstellkraft der Feder 6 wird dabei über das freie Federende 6a auf die Rückhollasche 7 und damit das Kraftschlußelement 4 und von diesem auf den Antriebshebel 1 übertragen.

Eine Übertragung der Rückstellkraft vom Kraftschlußelement 4 auf den Antriebshebel 1 erfolgt über das mittlere Kraftschlußelement 3 mittels des Gelenkes 42, 32 und der Verbindung 34, 101 zwischen dem Kraftschlußelement 3 und dem Antriebshebel 1. Gleichzeitig sind die aneinander anliegenden Kraftschlußelemente 2, 3, 4 und der Antriebshebel 1 jedoch auch durch eine Reibkraft miteinander gekoppelt, um einen Klapperschutz herzustellen.

Beim Rückführen des Antriebshebels 1 in die Nullpunktlage wird die Selbsthemmung zwischen den Kraftschlußelementen 2, 3, 4 und der Welle aufgehoben, da aufgrund der Rückstellbewegung der Rückstellfeder 6 keine Verkippung des Kraftschlußelements 4 über die Rückhollasche 7 mehr erfolgt.

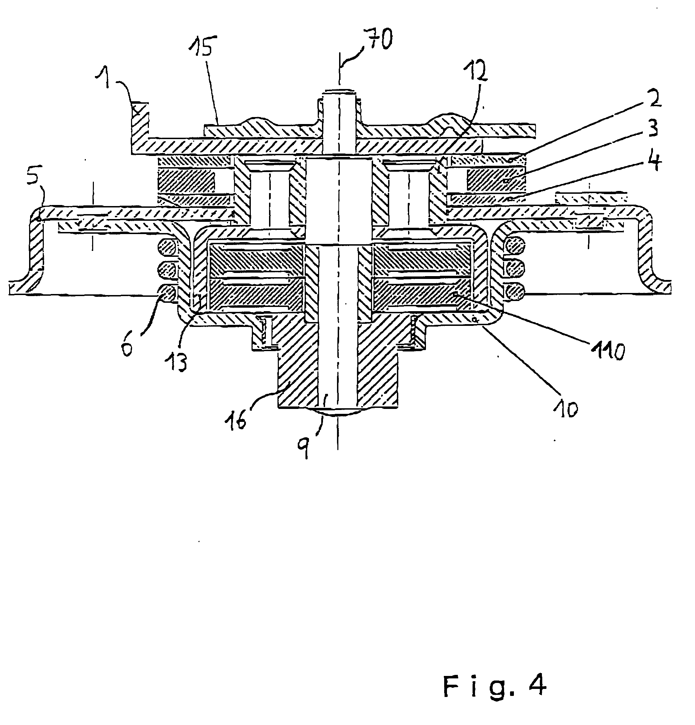

Figur 4 zeigt einen Schnitt durch einen erfindungsgemäßen beidseitig wirkenden Antrieb, wobei der dargestellte Antrieb im wesentlichen dem in den Figuren 1 bis 3 dargestellten Antrieb entspricht. Zusätzlich zu den dort dargestellten Elementen Antriebshebel 1, Abdeckblech 15, Kraftschlußelemente 2, 3, 4, Befestigungsträger 5 und Rückstellfeder 6 sind in Figur 4 ein Stufenbolzen 9, die Antriebswelle 12, ein Bremstopf 10 sowie im Bremstopf angeordnete Klemmbakken 110 einer Bremsvorrichtung dargestellt. Die Kraftschlußelemente 2, 3, 4 sind auf der Welle 12 angeordnet und Verklemmen bei Ausführen einer Schwenkbewegung des Antriebshebels 1 aus der Nullpunktlage heraus mit dieser. Die Antriebswelle 12 ist dabei über Klauen 13 und nur teilweise dargestellte Flügel mit einem Abtriebsritzel 16 gekoppelt. Die Antriebswelle 12 lagert auf dem Stufenbolzen 9, ist aber nicht drehfest mit diesem verbunden.

Figur 5 zeigt eine alternative Ausführungsform eines erfindungsgemäßen, beidseitig wirkenden Antriebs, die mit zwei Kraftschlußelementen 2', 3' auskommt. Das dem Antriebshebel 1' zugewandte Kraftschlußelement 2' ist über eine Rückhollasche 7' mit einer Rückholfeder 6' verbunden. Das andere Kraftschlußelement 3' steht über eine Nase 34' mit einer Befestigungslasche 101' des Antriebshebels 1' in Verbindung. Analog zu der zuvor in Bezug auf die Figuren 1 bis 3 beschriebenen Art und Weise erfolgt bei einem Schwenken des Antriebshebels 1' aus der Nullpunktlage heraus mittels der durch die Rückstellfeder 6' und die Rückhollasche 7' auf das Kraftschlußelement 2' tangential ausgeübten Kraft ein Verkippen der Kraftschlußelemente 2', 3', wobei die jeweiligen Kraftangriffsbereiche 21', 31' unter Selbsthemmung mit der Welle verklemmen und dadurch eine Kraftübertragung auf die Welle ermöglichen.

Gleichzeitig dient die Rückstellfeder 6' einem automatischen Rückführen des Antriebshebels 1' in die Nullpunkt-lage, wobei eine Kraftübertragung von der Rückstellfeder 6' auf den Antriebshebel 1' über die Rückhollasche 7' und das Kraftschlußelement 2' erfolgt und die Rückstellkraft formschlüssig vom Kraftschlußelement 2' auf das Kraftschlußelement 3' und von dessen Nase 34' über die Befestigungslasche 101' auf den Antriebshebel 1' übertragen wird.

In der Ausführungsform der Fig. 5 besitzt der Antriebshebel 1' eine gegenüber der Achse 70' der Antriebswelle versetzte Schwenkachse 71. Auf diese Weise wird ein günstigeres Übersetzungsverhältnis hergestellt, so daß mit einer geringeren Hubzahl ein bestimmter Verstellweg realisiert werden kann.

Die Erfindung beschränkt sich in ihrer Ausführung nicht auf die vorstehend angegebenen Ausführungsbeispiele. Insbesondere können beliebige andere Anordnungen von Kraftschlußelementen verwendet werden, die in Zusammenwirkung mit der Rückstellfeder bei einer Verschwenkung des Antriebshebels aus der Nullpunktlage heraus unter reibungsbedingter Selbsthemmung eine Übertragung der Drehbewegung des Antriebshebels auf die Welle ermöglichen.

Weitere derartige Anordnungen von Kraftschlußelementen sind beispielsweise in der DE 43 09 334 A1 beschrieben. Wesentlich für die Erfindung ist allein, daß der Rückhollauschlag) an einem der Kraftschlußelemente befestigt ist, so daß die Rückholfeder neben ihrer Funktion des Rückholens des Antriebshebels in seine Nullpunktlage bei einer Schwenkbewegung des Antriebshebels aus seiner Nullpunktlage heraus die zusätzliche Funktion erfüllt, als elastisches Schaltelement zu dienen und in Zusammenwirkung mit den Kraftschlußelementen eine reibungsbedingte Selbsthemmung der Kraftschlußelemente gegenüber der Welle herbeizuführen.

## Patentansprüche

1. Beidseitig wirkender Antrieb zur Erzeugung einer Drehbewegung, insbesondere für eine manuelle Höhen- oder Neigungsverstellung eines Fahrzeugsitzes, die wahlweise ausgehend von einer Nullpunkt-Lage eines Antriebshebels (1) in die eine oder andere Antriebsrichtung erfolgt, wobei eine anzutreibende Welle (12) nur dann gedreht wird, we n sich der Antriebshebel von der Nullpunkt-Lage weg bewegt, während bei einer Bewegung des Antriebshebels in Richtung der Nullpunkt-Lage die Welle nicht mitgenommen wird, mit
a) einer Rückholfeder (6,6') zum Rückholen des Antriebshebels in seine Nullpunkt-Lage, wobei die Rückholfeder mit einem gehäusefesten Gehäuseanschlag (8) und einem mit dem Antriebshebel gekoppelten Rückholanschlag (7,7') in Verbindung steht, und mit
b) mindestens zwei auf der Welle (12) angeordneten und miteinander gelenkig verbundenen Kraftschlußelementen (2,4;2') die mit dem Antriebshebel kraftschlüssig und/oder formschlüssig in Verbindung stehen und die bei einer von der Nullpunkt-Lage weg gerichteten Bewegung des Antriebshebels in Zusammenwirkung mit einem elastischen Schaltelement mit der Welle verklemmen und antriebsseitig ein Drehmoment auf die Welle übertragen,
**dadurch gekennzeichnet,**
**daß** der Rückholanschlag (7, 7') unmittelbar an einem der Kraftschlußelemente (2, 4; 2') befestigt ist, wobei die Rückholfeder (6, 6') gleichzeitig als elastisches Schaltelement dient.

2. Beidseitig wirkender Antrieb nach Anspruch 1, **dadurch gekennzeichnet, daß** die Rückholfeder (6, 6') abtriebsseitig an einem Bremsgehäuse (10) lagert, das eine Bremsvorrichtung enthält, die mit der Welle (12) derart in Verbindung steht, daß eine abtriebsseitige Drehmomentübertragung gesperrt, eine antriebsseitige Drehmomentübertragung dagegen möglich ist.

3. Beidseitig wirkender Antrieb nach Anspruch 1 oder 2, **dadurch gekennzeichnet, daß** zwischen den auf der Welle (12) angeordneten Kraftschlußelementen (2, 3, 4} und dem Bremsgehäuse (10) ein Befestigungsträger (5) angeordnet ist, über den der beidseitig wirkende Antrieb an einem tragenden Element, etwa einem Fahrzeugsitz befestigbar ist.

4. Beidseitig wirkender Antrieb nach einem der Ansprüche 2 oder 3, **dadurch gekennzeichnet, daß** der mit der Rückholfeder (6, 6') verbundene Gehäuseanschlag (8) am Bremsgehäuse (10) oder am Befestigungsträger (5) befestigt bzw. ausgebildet ist.

5. Beidseitig wirkender Antrieb nach einem der Ansprüche 1 bis 4, **dadurch gekennzeichnet, daß** die Rückholfeder als schraubenförmige Rückstellfeder (6, 6') mit zwei freien Enden (6a, 6b) ausgebildet ist, die mit dem Gehäuseanschlag (8) bzw. dem Rückholanschlag (7, 7') in Verbindung stehen.

6. Beidseitig wirkender Antrieb nach einem der Ansprüche 1 bis 5, **dadurch gekennzeichnet, daß** der Rückholanschlag als Lasche (7, 7') ausgebildet ist, die an dem entsprechenden Kraftschlußelemente (4, 2') ausgebildet ist und sich von diesem bis zur Rückstellfeder (6, 6') erstreckt.

7. Beidseitig wirkender Antrieb nach einem der Ansprüche 1 bis 6, **dadurch gekennzeichnet, daß** das mit dem Rückholanschlag (7, 7') verbundene Kraftschlußelement (4, 2') als Stanz-Biegeteil ausgebildet ist.

8. Beidseitig wirkender Antrieb nach einem der Ansprüche 1 bis 7, **dadurch gekennzeichnet, daß** drei auf der Welle (12) angeordnete und gelenkig miteinander verbundene Kraftschlußelemente (2, 3, 4) vorgesehen sind.

9. Beidseitig wirkender Antrieb nach Anspruch 8, **dadurch gekennzeichnet, daß** das mittelere Kraftschlußelement (3) als Sinterteil und die beiden daran anliegenden seitlichen Kraftschlußelemente (2, 4) als Blechteile ausgebildet sind.

10. Beidseitig wirkender Antrieb nach einem der vorangehenden Ansprüche, **dadurch gekennzeichnet,** daβ die Kraftschlußelemente (2, 3, 4; 2', 3') jeweils ringförmig ausgebildet sind und innere Kraftangriffsbereiche (21, 31, 41; 21', 31') aufweisen, die mit der zylindrischen Kontur der Welle (12) in Eingriff bringbar sind.

11. Beidseitig wirkender Antrieb nach einem der Ansprüche 1 bis 10, **dadurch gekennzeichnet, daß** die die einzelnen Kraftschlußelemente (2, 3, 4) verbindenden Gelenke in Form von Bolzen (32, 33) und Löchern (22, 42) ausgebildet sind.

12. Beidseitig wirkender Antrieb nach einem der Ansprüche 1 bis 10, **dadurch gekennzeichnet, daß** die einzelnen Kraftschlußelemente (2, 3, 4) aus Blech gefertigt sind und zur gelenkigen Verbindung untereinander mit Durchstellungen, Laschen und/oder Prägungen versehen sind.

## Claims

1. Bilaterally effective drive mechanism for producing a rotary movement, more particularly for the manual height or incline adjustment of a vehicle seat, which takes place selectively starting from a neutral position of a drive lever (1) into one or other drive direction, wherein a shaft (12) which is to be driven is only rotated when the drive lever is moved away from the neutral position, whilst during movement of the drive lever towards the neutral position the shaft is not entrained, with
a) a return spring (6, 6') for returning the drive lever into its neutral position wherein the return spring is connected to a housing stop (8) fixed on the housing, and to a return stop (7, 7') which is coupled to the drive lever, and with
b) at least two force locking elements (2, 4; 2') which are mounted on the shaft (12) and are connected together in articulated movement and which are in force-locking and/or positive-locking connection with the drive lever and which when the drive lever is moved away from the neutral position interact with an elastic switch element to clamp with the shaft and on the drive side transfer torque to the shaft,
**characterised in that**
the return stop (7, 7') is fixed directly on one of the force locking elements (2, 4; 2') wherein the return spring (6, 6') serves at the same time as elastic switch element.

2. Bilaterally effective drive mechanism according to claim 1 **characterised in that** the return spring (6, 6') is mounted on the output side on a brake housing (10) which contains a brake device which is connected to the shaft (12) so that torque transfer on the output side is blocked whilst torque transfer on the drive side is possible.

3. Bilaterally effective drive mechanism according to claim 1 or 2 **characterised in that** between the force locking elements (2, 3, 4) mounted on the shaft (12) and the brake housing (10) there is a fixing support (5) through which the bilaterally effective drive mechanism can be fixed on a supporting element, such as a vehicle seat.

4. Bilaterally effective drive mechanism according to one of claims 2 or 3 **characterised in that** the housing stop (8) connected to the return spring (6, 6') is formed or fixed on the brake housing (10) or on the fixing support (5).

5. Bilaterally effective drive mechanism according to one of claims 1 to 4 **characterised in that** the return spring is formed as a helical restoring spring (6, 6') with two free ends (6a, 6b) which interact with the housing stop (8) or the return stop (7, 7').

6. Bilaterally effective drive mechanism according to one of claims 1 to 5 **characterised in that** the return stop is formed as a tab (7, 7') which is formed on a corresponding force locking element (4, 2') and extends from this up to the restoring spring (6, 6').

7. Bilaterally effective drive mechanism according to one of claims 1 to 6 **characterised in that** the force locking element (4, 2') connected to the return stop (7, 7') is formed as a stamped bending part.

8. Bilaterally effective drive mechanism according to one of claims 1 to 7 **characterised in that** three force locking elements (2, 3, 4) are provided on the shaft (12) and are connected together for articulated movement.

9. Bilaterally effective drive mechanism according to claim 8 **characterised in that** the centre force locking element (3) is formed as a sintered part and the two side force locking elements (2, 4) adjoining same are formed as sheet metal parts.

10. Bilaterally effective drive mechanism according to one of the preceding claims **characterised in that** the force locking elements (2, 3, 4; 2', 3') are each ringshaped and have inner force engagement areas (21, 31,, 41; 21', 31') which can be brought into engagement with the cylindrical contour of the shaft (12).

11. Bilaterally effective drive mechanism according to one of claims 1 to 10 **characterised in that** the articulated joints connecting the individual force locking elements (2, 3, 4) are bolts (32, 33) and holes (22, 42).

12. Bilaterally effective drive mechanism according to one of claims 1 to 10 **characterised in that** the individual force locking elements (2, 3, 4) are made from sheet metal and are provided with indentations, tabs and/or apertures for articulated connection with each other.

## Revendications

1. Entraînement agissant dans les deux directions, pour la production d'un mouvement de rotation, en particulier pour un réglage manuel en hauteur ou en inclinaison d'un siège de véhicule, qui a lieu au choix, én partant d'une position neutre d'un levier d'entraînement (1), dans une ou dans l'autre direction d'entraînement, de sorte qu'un arbre entraîné (12) n'est mis en rotation que lorsque le levier d'entraînement se déplace en éloignement de la position neutre, tandis que lors d'un mouvement du levier d'entraînement en direction de la position neutre, l'arbre n'est pas entraîné, comprenant :
a) un ressort de rappel (6, 6') pour rappeler le levier d'entraînement jusque dans sa position neutre, ledit ressort de rappel étant relié à une butée (8) solidaire du boîtier et à une butée de rappel (7, 7') accouplée au levier d'entraînement, et comprenant
b) au moins deux éléments à coopération de forces (2, 4 ; 2') agencés sur l'arbre (12) et reliés de façon articulée l'un à l'autre, lesdits éléments étant reliés par coopération de forces et/ou par coopération de formes avec le levier d'entraînement et, lors d'un déplacement du levier d'entraînement dirigé en éloignement de la position neutre, sont coincés avec l'arbre au moyen d'un élément de commutation élastique, et transmettent du côté menant un couple de rotation à l'arbre,
**caractérisé en ce que**
la butée de rappel (7, 7') est fixée directement sur l'un des éléments à coopération de forces (2, 4 ; 2'), et en ce que le ressort de rappel (6, 6') sert simultanément d'élément de commutation élastique.

2. Entraînement agissant dans les deux directions, selon la revendication 1, **caractérisé en ce que** le ressort de rappel (6,6') est monté, du côté mené, sur un carter de frein (10) qui contient un dispositif de freinage, relié à l'arbre (12) de telle façon qu'il bloque une transmission du couple de rotation du côté mené, mais permet au contraire une transmission du couple de rotation du côté menant.

3. Entraînement agissant dans les deux directions, selon l'une ou l'autre des revendications 1 et 2, **caractérisé en ce qu'**un support de fixation (5) est agencé entre les éléments à coopération de forces (2, 3, 4) agencés sur l'arbre (12) et le carter de freinage (10), support au moyen duquel l'entraînement agissant dans les deux directions peut être fixé sur un élément porteur, comme par exemple un siège de véhicule.

4. Entraînement agissant dans les deux directions, selon l'une ou l'autre des revendications 2 et 3, **caractérisé en ce que** la butée de boîtier (8) reliée au ressort de rappel (6, 6') est fixée ou réalisée sur le carter de frein (10) ou sur le support de fixation (5).

5. Entraînement agissant dans les deux directions, selon l'une des revendications 1 à 4, **caractérisé en ce que** le ressort de rappel est réalisé sous la forme d'un ressort de rappel hélicoïdal (6, 6') avec deux extrémités libres (6a, 6b), lesquelles sont reliées à la butée de boîtier (8) ou respectivement à la butée de rappel (7, 7').

6. Entraînement agissant dans les deux directions, selon l'une des revendications 1 à 5, **caractérisée en ce que** la butée de rappel est réalisée sous la forme d'une patte (7, 7'), laquelle est réalisée sur l'élément à coopération de forces correspondant (4, 2') et s'étend depuis celui-ci jusqu'au ressort de rappel (6, 6').

7. Entraînement agissant dans les deux directions, selon l'une des revendications 1 à 6, **caractérisé en ce que** l'élément à coopération de forces (4, 2') relié à la butée de rappel (7, 7') est réalisé sous la forme d'une pièce estampée/pliée.

8. Entraînement agissant dans les deux directions, selon l'une des revendiications 1 à 7, **caractérisé en ce qu'**il est prévu trois éléments à coopération de forces (2, 3, 4) agencés sur l'arbre (12) et reliés de façon articulée les uns aux autres.

9. Entraînement agissant dans les deux directions, selon la revendication 8, **caractérisé en ce que** l'élément à coopération de forces central (3) est réalisé sous la forme d'une pièce frittée, et les deux éléments à coopération de forces latéraux (2, 4) appliqués contre celui-ci sont réalisés sous forme de pièces en tôle.

10. Entraînement agissant dans les deux directions, selon l'une des revendications précédentes, **caractérisé en ce que** les éléments à coopération de forces (2, 3, 4 ; 2', 3') sont respectivement réalisés sous forme annulaire, et présentent des zones intérieures d'attaque de force (21, 31, 41 ; 21', 31'), susceptibles d'être amenées en engagement avec le contour cylindrique de l'arbre (12).

11. Entraînement agissant dans les deux directions, selon l'une des revendications 1 à 10, **caractérisé en ce que** les articulations qui relient les éléments à coopération de forces individuels (2, 3, 4) sont réalisés sous la forme de goujons (32, 33) et de trous (22, 42).

12. Entraînement agissant dans les deux directions selon l'une des revendications 1 à 10, **caractérisé en ce que** les éléments à coopération de forces individuels (2, 3, 4) sont réalisés en tôle, et pourvus de traversées, de pattes et/ou d'empreintes, en vue de la liaison articulée les uns avec les autres.
